# EUROPÄISCHE PATENTANMELDUNG

(11) **EP 1 537 979 A2**
(43) Veröffentlichungstag der Anmeldung: **08.06.2005**
(21) Anmeldenummer: 04021088.2
(22) Anmeldetag: 04.09.2004
(51) Int. Cl.: B29C 65/20, B29C 65/78, E06B 3/96

(54) **Vorrichtung zum Verschweissen von vorzugsweise hohlen Profilstäben aus Kunststoff**

(30) Priorität: 04.12.2003 DE 20318935 U
(71) Anmelder: WILLI STÜRTZ MASCHINENBAU GmbH, D-53577 Neustadt (DE)
(72) Erfinder: Stürtz, Karl-Heinz, 53577 Neustadt-Roth (DE)
(74) Vertreter: Kutzenberger, Helga, Dr.

(57) **Zusammenfassung**

Die Erfindung bezieht sich auf eine Vorrichtung zum Verschweißen von vorzugsweise hohlen Profilstäben (1) aus Kunststoff, insbesondere zur Bildung von Fensterrahmen, bestehend aus mindestens einem Schweißkopf mit zwei relativ gegeneinander bewegbaren und der Aufnahme jeweils eines Profilstabes dienenden Schlitten (3) mit jeweils einer aus mindestens zwei Teilen gebildeten und durch einen Spannstempel betätigbaren Schweißbeilage mit mindestens einer im Querschnitt dreieckigen Begrenzungslippe (15).

## Beschreibung

Die Erfindung bezieht sich auf eine Vorrichtung zum Verschweißen von vorzugsweise hohlen Profilstäben aus Kunststoff, insbesondere zur Bildung von Fensterrahmen, bestehend aus mindestens einem Schweißkopf mit zwei relativ gegeneinander bewegbaren und der Aufnahme jeweils eines Profilstabes dienenden Schlitten mit jeweils einer aus mindestens zwei Teilen gebildeten und durch einen Spannstempel betätigbaren Schweißbeilage mit mindestens einer im Querschnitt dreieckigen Begrenzungslippe.

Die Herstellung von Rahmen, insbesondere von Fensterrahmen erfolgt in der Weise, dass vier auf Gehrung und in einer vorgegebenen Länge zugeschnittene Profilstäbe aus Kunststoff an ihren Gehrungsflächen miteinander verschweißt werden. Für dieses Verschweißen werden immer zwei Profilstäbe aus Kunststoff in einen Schweißkopf einer Schweißmaschine, die bis zu vier Schweißköpfe besitzen kann. Jeder Schweißkopf besteht aus zwei Schlitten mit jeweils einer aus mindestens zwei Teilen gebildeten Schweißbeilage. In diesen beiden Teilen eines Schweißkopfes wird jeweils ein Profilstab aus Kunststoff eingelegt, ausgerichtet und mittels eines Stempels festgespannt. Über eine Heizplatte werden dann diese beiden Profilstäbe aus Kunststoff an den einander zugewandten Gehrungsflächen auf eine vorgegebene Temperatur erhitzt, die so hoch ist, dass die beiden Profilstäbe aus Kunststoff im Bereich ihrer Gehrungsflächen anschmelzen. Nach dem Entfernen der Heizplatte werden die beiden Schlitten mit den Profilstäben aus Kunststoff relativ gegeneinander gepresst. Dadurch verschweißen die beiden Profilstäbe aus Kunststoff unter Bildung von sogenannten Schweißraupen miteinander. Nach einer vorgegebenen Abkühlzeit werden die beiden Schlitten mit den Schweißbeilagen geöffnet und auseinander bewegt.

Um den Querschnitt der Schweißraupen im Übergangsbereich zu den Profilstäben aus Kunststoff möglichst klein zu halten, ist die Schweißbeilage mit mindestens einer im Querschnitt dreieckigen Begrenzungslippe versehen. Durch die Begrenzungslippen der sich gegenüberliegenden Schweißbeilagen besitzt dann die Schweißraupe einen V-förmigen Querschnitt. Dieser V-förmige Querschnitt der Schweißraupe bringt es mit sich, dass die beiden Schlitten nicht sofort nach oben geöffnet, sondern erst geringfügig nach außen verschoben werden müssen. Eine solche Verschiebung ist bei den bekannten Schweißköpfen dann nicht möglich, wenn die obere Fläche der Profilstäbe aus Kunststoff keine ebene Fläche aufweist, sondern abgerundet ist. Dies trifft auch dann zu, wenn die Schweißbeilagen die Profilstäbe aus Kunststoff an der Innenseite des zu bildenden Rahmens umgreifen.

Der Erfindung liegt nun die Aufgabe zugrunde, eine Vorrichtung zum Verschweißen von vorzugsweise hohlen Profilstäben aus Kunststoff, insbesondere zur Bildung von Fensterrahmen, zu schaffen, die auch dann ein problemloses Öffnen der Schlitten mit den Schweißbeilagen ermöglicht, wenn die obere Fläche der Profilstäbe aus Kunststoff abgerundet ist bzw. wenn die Schweißbeilagen die Profilstäbe aus Kunststoff an der Innenseite des zu bildenden Rahmens umgreifen.

Zur Lösung dieser Aufgabe wird gemäss der Erfindung bei einer Vorrichtung der eingangs beschriebenen Gattung vorgeschlagen, dass zumindest der die Begrenzungslippe tragende Teil der Schweißbeilage in seiner ungespannten Stellung einen vorgegebenen Abstand von der Schweißebene aufweist, vor Beginn des Schweißvorganges in Richtung auf die Schweißebene in eine Spann- bzw. Arbeitsstellung und kurzzeitig nach dem Schweißvorgang wieder in seine Grundstellung zurück bewegbar ist.

Bei einer solchen Ausgestaltung der Vorrichtung nimmt zumindest der die Begrenzungslippe tragende Teil der Schweißbeilage eine Stellung, die sogenannte Grundstellung, ein, in der sich die Begrenzungslippe mit einem vorgegebenen Abstand vor der eigentlichen Schweißebene befindet. Beim Einspannen der Profilstäbe aus Kunststoff in die Schlitten wird durch den Spannstempel zunächst der die Begrenzungslippe tragende Teil der Schweißbeilage in eine Spann- bzw. Arbeitsstellung bewegt, bevor der eigentliche Spannvorgang erfolgt. Nach dem Schweißvorgang und einer vorgegebenen Abkühlzeit wird zunächst der Spannstempel angehoben. Bei dieser Bewegung des Spannstempels wird der die Begrenzungslippe tragende Teil der Schweißbeilage geringfügig in axialer Richtung des Profilstabes aus Kunststoff in seine Grundstellung zurück bewegt. Erst danach werden die Schlitten mit den Schweißbeilagen geöffnet.

Weitere Merkmale einer Vorrichtung gemäss der Erfindung sind in den Ansprüchen 2 bis 7 offenbart.

Die Erfindung wird nachfolgend anhand eines in einer Zeichnung dargestellten Ausführungsbeispieles näher erläutert. Dabei zeigen
- **Figur 1**: einen Spannschlitten einer Vorrichtung gemäss der Erfindung mit in ihrer Grundstellung befindlichen Begrenzungslippe und
- **Figur 2**: den Spannschlitten der **Figur 1** mit in ihrer Spann- bzw. Arbeitsstellung gezeichneten Begrenzungslippe.

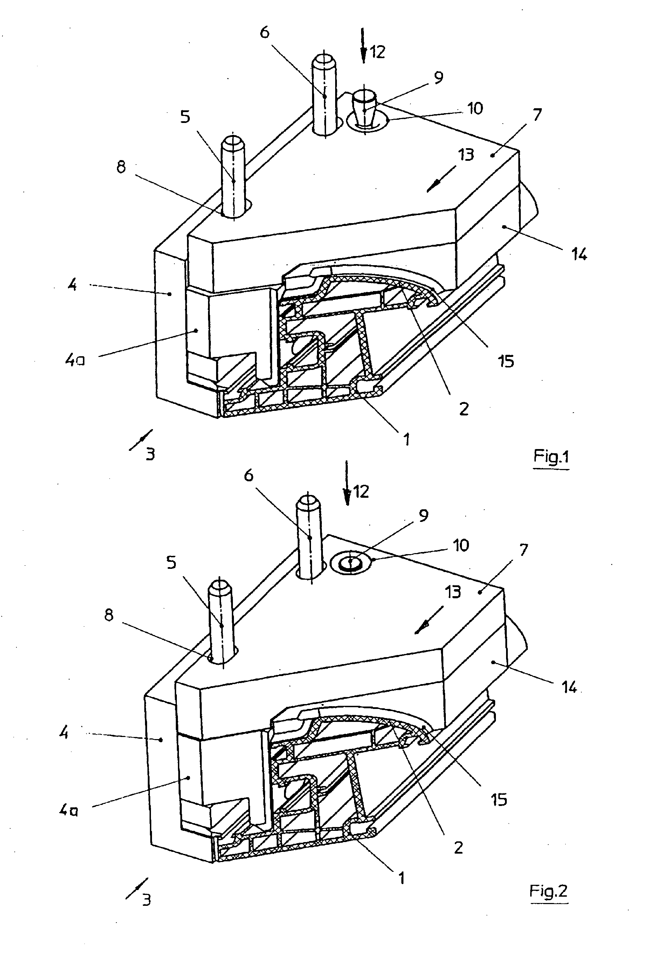

In den **Figuren 1 und 2** der Zeichnung ist nur ein Ende eines unter Gehrung auf eine vorgegebene Länge zugeschnittenen Profilstabes 1 gezeigt, der eine abgerundete bzw. gewölbte obere Fläche 2 aufweist. Dieser Profilstab 1 befindet sich in einem ersten Spannschlitten 3, der eine nicht gezeichnete Grundplatte besitzt. Vorsorglich wird darauf hingewiesen, dass bei einer Vorrichtung zum Verschweißen von hohlen Profilen aus Kunststoff zur Bildung eines Fensterrahmens im Bereich einer Rahmenecke auf der Grundplatte immer ein zweiter, jedoch um 90° versetzter Spannschlitten 3 benötigt wird, der einen weiteren Profilstab 1 aufnehmen kann, mit dem der erste Profilstab 1 verschweißt werden soll. Dieser zweite Spannschlitten 3 ist genau so wie der erste Spannschlitten 3 ausgebildet, so dass auf dessen Darstellung verzichtet werden kann. Auf der erwähnten Grundplatte ist eine im Querschnitt L-förmige Wechselplatte 4 befestigt, die einen kürzeren, in der Zeichnung unteren und horizontalen Schenkel sowie einen längeren, in der Zeichnung vertikalen Schenkel besitzt. An der Innenseite des horizontalen Schenkels der Wechselplatte 4 befinden sich zwei mit Abstand voneinander angeordnete Führungsstifte 5, 6, die parallel zum vertikalen Schenkel der Wechselplatte 4 verlaufen. Diese Führungsstifte 5, 6 nehmen eine Zulage 4a auf, die aufgrund der Führungsstifte 5, 6 höheneinstellbar an der Wechselplatte 4 gehalten ist. Der Zulage 4a ist mindestens eine nicht dargestellte, vorgespannte Druckfeder zugeordnet, die das Bestreben hat, die Zulage 4a immer in ihrer obersten Stellung zu halten. Diese Stellung der Zulage 4a ist allerdings in der Zeichnung nicht dargestellt. Auf der in der Zeichnung oberen Seite der Zulage 4a ist ein in horizontaler Richtung verlaufende, in der Zeichnung nicht erkennbare Führung vorgesehen, die mit einem entsprechende Führungsteil einer Tragplatte 7 zusammenwirkt. Dieses Führungsteil und die Führung ermöglichen eine Verschiebung der Tragplatte 7 in Richtung eines Pfeils 13 und zurück. Die Führungsstifte 5, 6 ragen durch die Tragplatte 7. Damit diese die horizontale Verschiebung der Tragplatte 7 nicht beeinträchtigen, sind in die Tragplatte 7 im Bereich der Führungsstifte 5, 6 Langlöcher 8 eingearbeitet.

Über die vorerwähnte, der Zulage 4a zugeordnete, jedoch nicht dargestellte, vorgespannte Druckfeder, wird die Tragplatte 7 durch die Zulage 4a ebenfalls immer in ihrer obersten Stellung gehalten. Auch diese Stellung der Tragplatte 7 ist in der Zeichnung nicht dargestellt. Über nicht dargestellte, vorgespannte Druckfedern wird die Tragplatte 7 in ihrer Stellung gemäss **Figur 1,** der sogenannten Grundstellung, gehalten.

An der Zulage 4a ist femer ein Stellstift 9 gesichert und verschiebbar geführt, der durch eine Öffnung 10 der Tragplatte 7 ragt und in seiner in der **Figur 1** gezeichneten Stellung durch einen nicht dargestellten Anschlag und eine ebenfalls nicht dargestellte, vorgespannte Feder gehalten wird. Dieser Stellstift 9 besitzt an seinem in der **Figur 1** aus der Tragplatte 7 herausragenden Ende einen angeformten Konus, der hier eine keilförmige Anstellfläche 11 bildet. Wenn nun ein nicht gezeichneter Spannstempel in Richtung des Pfeils 12 von oben gegen die Tragplatte 7 bewegt wird, trifft er zunächst auf die obere Fläche des Stellstiftes 9. Dadurch wird der Stellstift 9 nach unten in die Tragplatte 7 bewegt. Die Öffnung 10 der Tragplatte 7 und die keilförmige Anstellfläche 11 besitzen nun einen solchen Querschnitt und eine solche Lage zueinander, dass bei dieser Bewegung des Spannstempels die Tragplatte 7 durch die keilförmige Anstellfläche 11 des Stellstiftes 9 in Richtung des Pfeils 13 bewegt wird und am Ende dieser Bewegung die Lage gemäss der **Figur 2** einnimmt. In der unteren Endstellung des Spannstempels ist der Profilstab 1 im Schlitten 2 fest eingespannt.

Die Tragplatte 7 ist an ihrer Unterseite als sogenannte Schweißbeilage ausgebildet oder - wie dargestellt - mit einer getrennten, jedoch an ihr befestigten Schweißbeilage 14 versehen. Die Schweißbeilage 14 nimmt an ihrer in der Zeichnung vorderen Seite eine im Querschnitt dreieckige Begrenzungslippe 15 auf. Bei der oben erwähnten Verschiebung der Tragplatte 7 durch den vom Spannstempel bewegten Stellstift 9 wird also zwangsläufig auch die Schweißbeilage 14 mit der Begrenzungslippe 15 aus der Stellung der **Figur 1** in die Stellung gemäss **Figur 2,** die sogenannte Spann- bzw. Arbeitsstellung, bewegt. Diese Bewegung erfolgt ausschließlich durch den Stellstift, so dass für dieselbe also kein zusätzlicher Antrieb erforderlich ist. Die Verschiebung der Tragplatte 7 durch den Stellstift beträgt etwa 0,5 bis 3,0 mm, vorteilhaft 2,00 mm. Bei dieser Verschiebung führt der Stellstift einen Hub von etwa 8,0 bis 10,0 mm aus. In dieser Spann- bzw. Arbeitsstellung der Zulage 4a, der Tragplatte 7 und der Schweißbeilage 14 mit der Begrenzungslippe 15 werden die Gehrungsflächen der beiden miteinander zu verbindenden Profilstäbe 1 in an sich bekannter Weise zunächst durch eine Heizplatte auf eine vorgegebene Temperatur erwärmt und damit angeschmolzen. Nach dem Entfernen der Heizplatte werden die beiden Profilstäbe 1 durch eine Relativbewegung der beiden, jeweils einen eingespannten Profilstab 1 aufnehmenden Schlitten 2 fest gegeneinander gepresst und damit unter Bildung einer Schweißraupe miteinander verschweißt. Die im Querschnitt dreieckigen Begrenzungslippen 15 der Schweißbeilage 14 bewirken, dass die bei Schweißvorgang entstehende Schweißraupe einen V-förmigen Querschnitt aufweist.

Nach einer gewissen Abkühlzeit der miteinander verschweißten Profilstäbe 1 wird der nicht gezeichnete Spannstempel entgegen der Richtung des Pfeils 12, also nach oben, bewegt. Dieser Bewegung folgt zunächst nur der Stellstift 9, was zur Folge hat, dass sich die Tragplatte 7 und damit auch die mit ihr verbundene Schweißbeilage 14 mit der Begrenzungslippe 15 entgegen der Richtung des Pfeils 13 verschieben. Diese Verschiebung erfolgt durch die bereits erwähnte, vorgespannte aber nicht eingezeichnete Druckfeder. Durch eine entsprechende Wahl der Größe der Kraft der vorgespannten Druckfedern für die vertikale Rückstellung des Stellstiftes 9 und die horizontale Rückstellung der Tragplatte 7 ist immer sichergestellt, dass sich die Tragplatte 7 zuerst in Längsrichtung des Profilstabes 1 verschiebt und danach erst vom Profilstab 1 abhebt. Am Ende der horizontalen Verschiebung der Tragplatte 7 gibt die im Querschnitt V-förmige Schweißnaht die Begrenzungslippe 15 frei, so dass bei der weiteren Bewegung des Spannstempels die Tragplatte 7, die Zulage 4a und die Schweißbeilage 14 mit der Begrenzungslippe 15 jetzt ohne Beeinträchtigung der Schweißraupe angehoben werden können. Danach wird der Profilstab 1 bzw. werden die beiden Profilstäbe 1 für eine Entnahme freigegeben.

In Abänderung des erläuterten Ausführungsbeispieles ist es möglich, die Anstellfläche 11 anders auszubilden und die Verschiebung der Tragplatte 7 anders durchzuführen. Entscheidend dabei ist jedoch immer, dass diese Verschiebung der Tragplatte 7 in Richtung auf die zu bildende Schweißraupe immer in Abhängigkeit von der Bewegung des Spannstempels erfolgt und vor dem eigentlichen Spannen der Profilstäbe 1 beendet ist.

## Patentansprüche

1. Vorrichtung zum Verschweißen von vorzugsweise hohlen Profilstäben aus Kunststoff, insbesondere zur Bildung von Fensterrahmen, bestehend aus mindestens einem Schweißkopf mit zwei relativ gegeneinander bewegbaren und der Aufnahme jeweils eines Profilstabes dienenden Schlitten mit jeweils einer aus mindestens zwei Teilen gebildeten und durch einen Spannstempel betätigbaren Schweißbeilage mit mindestens einer im Querschnitt dreieckigen Begrenzungslippe, **dadurch gekennzeichnet, dass** zumindest der die Begrenzungslippe (15) tragende Teil der Schweißbeilage (14) in seiner ungespannten Stellung einen vorgegebenen Abstand von der Schweißebene aufweist, vor Beginn des Schweißvorganges in Richtung auf die Schweißebene in eine Spann- bzw. Arbeitsstellung und kurzzeitig nach dem Schweißvorgang wieder in seine Grundstellung zurück bewegbar ist.

2. Vorrichtung nach Anspruch 1, **dadurch gekennzeichnet, dass** der die Begrenzungslippe (15) tragende Teil der Schweißbeilage (14) durch die Bewegung des Spannstempels sowohl aus seiner Grundstellung in seine Spann- bzw. Arbeitsstellung als auch in seine Grundstellung zurück bewegbar ist.

3. Vorrichtung nach Anspruch 2, **dadurch gekennzeichnet, dass** dem die Begrenzungslippe (15) tragenden Teil der Schweißbeilage (14) ein durch die Bewegung des Spannstempels bewegbares Hebelgestänge zugeordnet ist.

4. Vorrichtung nach Anspruch 1, **dadurch gekennzeichnet, dass** der die Begrenzungslippe (15) tragende Teil der Schweißbeilage (14) durch die Bewegung des Spannstempels entgegen der Kraft einer Feder aus seiner Grundstellung in seine Spann- bzw. Arbeitsstellung und durch die Feder in seine Grundstellung zurück bewegbar ist.

5. Vorrichtung nach den Ansprüchen 1 und 4, **dadurch gekennzeichnet, dass** dem die Begrenzungslippe (15) tragenden Teil der Schweißbeilage (14) ein durch die Bewegung des Spannstempels entgegen der Kraft einer Feder verschiebbarer Stellstift (9) zugeordnet ist.

6. Vorrichtung nach Anspruch 5, **dadurch gekennzeichnet, dass** der Stellstift (9)eine konische und an dem die Begrenzungslippe (15) tragenden Teil der Schweißbeilage (14) zum Anliegen bringbare, keilförmige Anstellfläche (11) aufweist.

7. Vorrichtung nach Anspruch 6, **dadurch gekennzeichnet, dass** die keilförmige Stellfläche (11) durch einen am Stellstift (9) angeformten Konus gebildet ist.
